# EUROPÄISCHE PATENTSCHRIFT

(11) **EP 0 524 523 B1**
(45) Veröffentlichungstag und Bekanntmachung des Hinweises auf die Patenterteilung: **08.01.1997**
(21) Anmeldenummer: 92111973.1
(22) Anmeldetag: 14.07.1992
(51) Int. Cl.: G01F 1/84

(54) **Massendurchflussmessgerät**
Mass flow rate measuring apparatus
Appareil pour mesurer le débit massique

(30) Priorität: 22.07.1991 DE 4124295
(43) Veröffentlichungstag der Anmeldung: 27.01.1993
(60) Teilanmeldung: 95115179.4
(73) Patentinhaber: Krohne AG, CH-4019 Basel (CH)
(72) Erfinder: Hussain, Yousif A., Dr. Dipl.Ing., Surrey, CR 5 2 SE (GB); Rolph, Chris N., Dipl.Ing., Surrey, RH 1 4 DE (GB)
(74) Vertreter: Gesthuysen, Hans Dieter, Dipl.-Ing.

(56) Entgegenhaltungen:
- EP-A- 0 317 340
- EP-A- 0 350 712
- EP-A- 0 469 448
- WO-A-88/08517
- FR-A- 2 598 801

## Beschreibung

Die Erfindung betrifft ein Massendurchflußmeßgerät für strömende Medien, das nach dem Coriolis-Prinzip arbeitet, mit mindestens einer das strömende Medium führenden, zumindest im wesentlichen geraden Coriolis-Rohrleitung, mit mindestens einem auf die Coriolis-Rohrleitung einwirkenden Schwingungserzeuger, mit mindestens einem Coriolis-Kräfte und/oder auf Coriolis-Kräften beruhende Schwingungen erfassenden Meßwertaufnehmer und mit einem Kompensationszylinder, wobei die Coriolis-Rohrleitung innerhalb des Kompensationszylinders angeordnet ist und die Coriolis-Rohrleitung und der Kompensationszylinder in eine axialer Relativbewegungen ausschließenden Weise miteinander verbunden sind. (siehe z.B. EP-A-0350712)

Massendurchflußmeßgeräte für strömende Medien, die nach dem Coriolis-Prinzip arbeiten, sind in verschiedenen Ausführungen bekannt (vgl. z. B. die DE-OSen 26 29 833, 28 22 087, 28 33 037, 29 38 498, 30 07 361, 33 29 544, 34 43 234, 35 03 841, 35 05 166, 35 26 297, 37 07 777, 39 16 285 und 40 16 907, die EP-OSen 0 083 144, 0 109 218, 0 119 638, 0 196 150, 0 210 308, 0 212 782, 0 235 274, 0 239 679, 0 243 468, 0 244 692, 0 271 605, 0 275 367 und 0 282 552 sowie die US-PSen 4,491,009, 4,628,744 und 4,666,421) und finden in zunehmendem Maße in der Praxis Verwendung.

Bei Massendurchflußmeßgeräten für strömende Medien, die nach dem Coriolis-Prinzip arbeiten, unterscheidet man grundsätzlich zwischen einerseits solchen, deren Coriolis-Rohrleitung zumindest im wesentlichen gerade ausgeführt ist, und andererseits solchen, deren Coriolis-Rohrleitung schleifenförmig ausgeführt ist. Außerdem unterscheidet man bei den in Rede stehenden Massendurchflußmeßgeräten zwischen einerseits solchen, die nur eine Coriolis-Rohrleitung aufweisen, und andererseits solchen, die zwei Coriolis-Rohrleitungen aufweisen; bei den Ausführungsformen mit zwei Coriolis-Rohrleitungen können diese strömungstechnisch in Reihe oder parallel zueinander liegen. Alle Ausführungsformen haben Vorteile und Nachteile.

Ausführungsformen von Massendurchflußmeßgeräten, bei denen die Coriolis-Rohrleitung gerade ausgeführt ist bzw. die Coriolis-Rohrleitungen gerade ausgeführt sind, sind in bezug auf den mechanischen Aufbau einfach und folglich mit relativ geringen Kosten herzustellen. Dabei sind auch die Rohrleitungsinnenflächen gut bearbeitbar, z. B. polierbar. Im übrigen haben sie einen geringen Druckverlust.

Nachteilig ist bei Massendurchflußmeßgeräten, die nach dem Coriolis-Prinzip arbeiten und bei denen die Coriolis-Rohrleitung gerade ausgeführt ist bzw. die Coriolis-Rohrleitungen gerade ausgeführt sind, daß sowohl thermisch bedingte Ausdehnungen bzw. thermisch bedingte Spannungen als auch von außen einwirkende Kräfte und Momente zu Meßfehlern und zu mechanischen Schäden, nämlich zu Spannungsrissen, führen können.

Aus der WO - A - 88/08517 ist beispielsweise ein Massendurchflußmeßgerät bekannt, bei dem die Coriolis-Rohrleitung gerade ausgeführt ist. Die Vorteile von Massendurchflußmeßgeräten mit gerade ausgeführten Coriolis-Rohrleitungen, nämlich einfacher mechanischer Aufbau und geringer Druckverlust, sind bei diesem Massendurchflußmeßgerät nur noch teilweise gegeben, da zum Abbau der thermisch bedingten Spannungen mindestens eine Krümmung der Rohrleitung vorgesehen ist, die zwar außerhalb der zu Schwingungen angeregten Coriolis-Rohrleitung liegt, aber trotzdem hinsichtlich Herstellbarkeit und Druckverlust die Nachteile mit sich bringt, die von Coriolis-Rohrleitungen mit schleifenförmiger Gestalt bekannt sind.

Weiter ist aus der FR - A - 2 598 801 ein Massendurchflußmeßgerät bekannt, bei dem die Coriolis-Rohrleitung nicht in einer axiale Relativbewegungen ausschließenden Weise mit einem Kompensationszylinder verbunden ist, sondern über federnde Elemente mit dem Gehäuse derart verbunden ist, daß thermisch bedingte axiale Bewegungen ohne weiteres ausgeglichen werden können. Dabei ist die flexible Verbindung zwischen der Coriolis-Rohrleitung und dem Gehäuse insbesondere hinsichtlich einer definierten Anregung der Coriolis-Rohrleitung durch den Schwingungserzeuger problematisch, da dieser sich an dem nicht fest mit der Coriolis-Rohrleitung verbundenen Gehäuse abstützt. Zudem ist die Herstellung dieses bekannten Massendurchflußmeßgerätes aufgrund der kritischen Verbindungen zwischen der Coriolis-Rohrleitung und dem Gehäuse relativ aufwendig.

Der Erfindung liegt nun die Aufgabe zugrunde, das eingangs beschriebene Massendurchflußmeßgerät, bei dem die Coriolis-Rohrleitung bzw. die Coriolis-Rohrleitung zumindest im wesentlichen gerade ausgeführt ist bzw. sind, so auszugestalten und weiterzubilden, daß Temperaturschwankungen sowie von außen einwirkende Kräfte und Momente nicht, jedenfalls aber in geringerem Maße, zu Meßfehlern und nicht zu mechanischen Schäden führen.

Das erfindungsgemäße Massendurchflußmeßgerät, bei dem die zuvor hergeleitete und dargelegte Aufgabe gelöst ist, ist dadurch gekennzeichnet, daß die Coriolis-Rohrleitung mit Zug-Vorspannung innerhalb des Kompensationszylinders angeordnet ist. Mit zunehmender Temperatur wird die Zug-Vorspannung abgebaut und die danach auftretende Druckspannung kann in zulässigen Grenzen gehalten werden. Die Baueinheit aus der Coriolis-Rohrleitung und dem Kompensationszylinder ist also weitgehend "immun" gegen Temperaturschwankungen und gegen von außen einwirkende Kräfte und Momente.

Im einzelnen gibt es nun eine Vielzahl von Möglichkeiten, das erfindungsgemäße Massendurchflußmeßgerät auszugestalten und weiterzubilden. Dazu wird verwiesen einerseits auf die dem Patentanspruch 1 nachgeordneten Patentansprüche, andererseits auf die Beschreibung von bevorzugten Ausführungsbeispielen in Verbindung mit der Zeichnung; es zeigt
- Fig. 1: einen Längsschnitt durch ein erstes Ausführungsbeispiel eines erfindungsgemäßen Massendurchflußmeßgeräts,
- Fig. 2: einen vergrößerten Ausschnitt aus Fig. 1,
- Fig. 3: in gegenüber der Fig. 2 vergrößerter Darstellung, einen Schnitt durch das Massendurchflußmeßgerät nach den Fig. 1 und 2, entlang der Linie In - III in Fig. 2,
- Fig. 4: einen Längsschnitt durch einen Teil eines zweiten Ausführungsbeispiels eines erfindungsgemäßen Massendurchflußmeßgeräts,
- Fig. 5: einen Längsschnitt durch einen Teil eines dritten Ausführungsbeispiels eines erfindungsgemäßen Massendurchflußmeßgeräts,
- Fig. 6: einen Längsschnitt durch ein vierten Ausführungsbeispiel eines erfindungsgemäßen Massendurchflußmeßgeräts und
- Fig. 7: einen Längsschnitt durch ein fünften Ausführungsbeispiel eines erfindungsgemäßen Massendurchflußmeßgeräts.

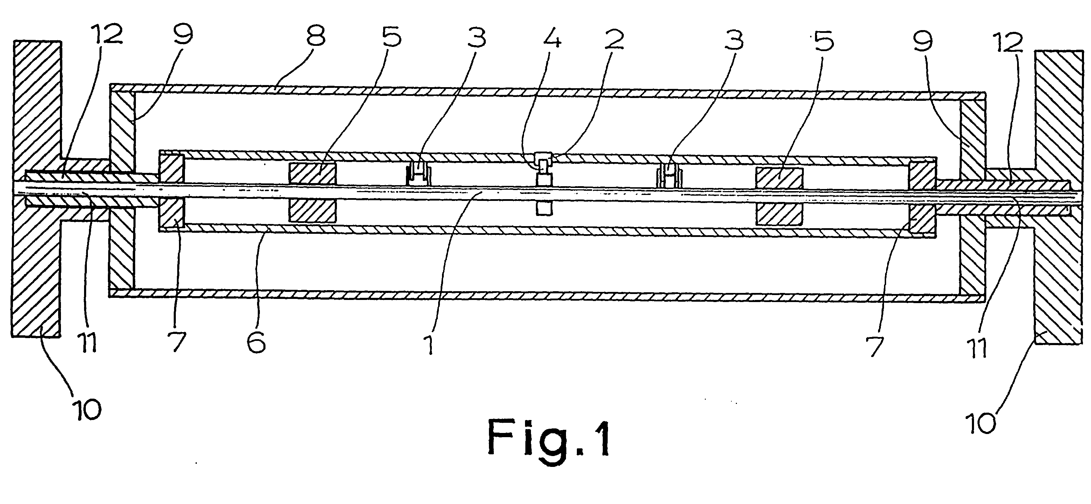

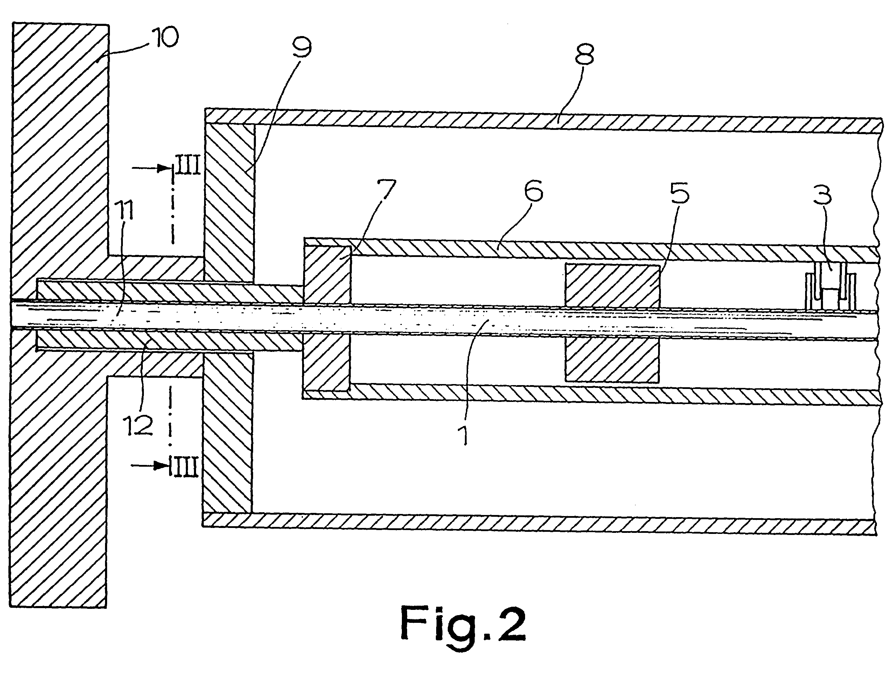

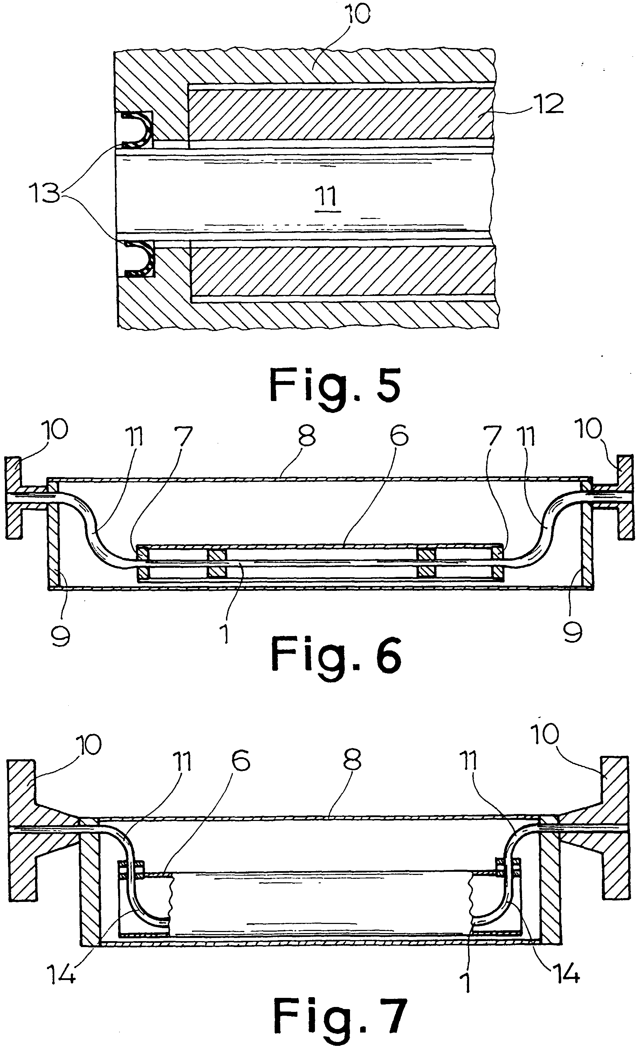

Bei dem erfindungsgemäßen Massendurchflußmeßgerät für strömende Medien handelt es sich um ein solches, das nach dem Coriolis-Prinzip arbeitet. Folglich gehören zu dem erfindungsgemäßen Massendurchflußmeßgerät eine das strömende Medium führende gerade Coriolis-Rohrleitung 1 (Fig. 1 bis 5) bzw. im wesentlichen gerade Coriolis-Rohrleitung 1 (Fig. 6 und 7), ein auf die Coriolis-Rohrleitung 1 einwirkender Schwingungserzeuger 2 und zwei Coriolis-Kräfte und/oder auf Coriolis-Kräften beruhende Coriolis-Schwingungen erfassende Meßwertaufnehmer 3. In dem in Fig. 1 dargestellten Ausführungsbeispiel wirkt der Schwingungserzeuger 2 mit einem an der Coriolis-Rohrleitung 1 vorgesehenen Pendelarm 4 zusammen. In bezug auf die hier verwirklichte Maßnahme "Coriolis-Rohrleitung 1 mit Pendelarm 4" wird noch auf die EP - A - 0 469 448 verwiesen. Im übrigen zeigt die Fig. 1, daß die Coriolis-Rohrleitung 1 noch mit Massekörpern 5 versehen ist, durch deren Masse und Anordnung die Eigenfrequenz der Coriolis-Rohrleitung 1 - in bestimmten Grenzen - beeinflußt werden kann.

Wie die Figuren zeigen, ist bei allen dargestellten Ausführungsbeispielen ein Kompensationszylinder 6 vorgesehen und die Coriolis-Rohrleitung 1 innerhalb des Kompensationszylinders 6 angeordnet. Dabei sind die Coriolis-Rohrleitung 1 und der Kompensationszylinder 6 in einer axiale Relativbewegungen ausschließenden Weise miteinander verbunden, in allen dargestellten Ausführungsbeispielen über zwei endseitig an den Kompensationszylinder 6 angeschlossene Verbindungsringe 7. Die Verbindungsringe 7 können durch Schweißen oder durch Hartlöten mit dem Kompensationszylinder 6 verbunden sein; denkbar ist es auch, die Verbindungsringe endseitig in den Kompensationszylinder einzuschrauben. Vorzugsweise bestehen die Verbindungsringe 7 aus dem gleichen Werkstoff wie die Coriolis-Rohrleitung 1. Die Coriolis-Rohrleitung 1 ist durch Schweißen oder durch Hartlöten mit den Verbindungsringen 7 verbunden, vorzugsweise durch Vakuum-Hartlöten.

Einleitend ist ausgeführt worden, daß durch den bzw. in Verbindung mit dem Kompensationszylinder 6 und eine ergänzende Maßnahme die Coriolis-Rohrleitung 1 gleichsam "immun" gegen Temperaturschwankungen sowie gegen von außen einwirkende Kräfte und Momente gemacht werden kann.

Die erfindungsgemäße ergänzende Maßnahme zur "Immunisierung" der Coriolis-Rohrleitung 1 gegen Temperaturschwanklungen sowie gegen von außen einwirkende Kräfte und Momente besteht nun darin, daß die Coriolis-Rohrleitung mit Zug-Vorspannung innerhalb des Kompensationszylinders 6 angeordnet ist. Mit zunehmender Temperatur wird die Zug-Vorspannung abgebaut und die danach auftretende Druckspannung kann in zulässigen Grenzen gehalten werden.

Der Realisierung der Maßnahme "Anordnung der Coriolis-Rohrleitung mit Zug-Vorspannung innerhalb des Kompensationszylinders" ist es dienlich, wenn besondere Werkstoffe für die Coriolis-Rohrleitung 1 und für den Kompensationszylinder 6 gewählt werden. Vorzugsweise besteht die Coriolis-Rohrleitung 1 aus einer Nickel-Legierung, insbesondere aus Hastelloy C 22, und der Kompensationszylinder 6 aus einer Nickel-Legierung, insbesondere aus Hastelloy C 4, oder aus unlegiertem Stahl AISI 1078.

Zuvor ist bereits darauf hingewiesen worden, daß die Coriolis-Rohrleitung 1 vorzugsweise durch Hartlöten mit den Verbindungsringen 7 verbunden wird. Dabei empfiehlt es sich, als Lötmaterial eine Nickel-Legierung mit einer Löttemperatur von ca. 1000° C zu verwenden.

Wird in der zuvor beschriebenen Weise und mit den zuvor beschriebenen Werkstoffen gearbeitet, so wird die gewünschte Zug-Vorspannung der Coriolis-Rohrleitung 1 automatisch dadurch erreicht, daß sich die Coriolis-Rohrleitung 1 während des Lötens stärker ausdehnt als die übrigen Bauteile, so daß nach dem Abkühlen die gewünschte Zug-Vorspannung vorhanden ist, und zwar eine Zug-Vorspannung von ca. 80 bis 100 MPA.

Eine weitere ergänzende Maßnahme zur "Immunisierung" der Coriolis-Rohrleitung 1 gegen Temperaturschwankungen und gegen von außen einwirkende Kräfte und Momente besteht darin, einen äußeren, vorzugsweise aus rostfreiem Stahl bestehenden Aufnahmezylinder 8 vorzusehen und die Baueinheit aus der Coriolis-Rohrleitung 1, dem Kompensationszylinder 6 und den Verbindungsringen 7 innerhalb des Aufnahmezylinders 8 anzuordnen. Diese Ausführungsform ist vorzugsweise dadurch ergänzend gekennzeichnet, daß der Aufnahmezylinder 8 zwei endseitig angeschlossene, vorzugsweise aus rostfreiem Stahl bestehende Verbindungsringe 9 aufweist, an die Verbindungsringe 9 jeweils ein nach außen ragender Anschlußflansch 10 angeschlossen ist und mit der Coriolis-Rohrleitung 1 verbundene Anschluß-Rohrleitungen 11 durch die Verbindungsringe 9 in die Anschlußflanschen 10 ragen. Zweckmäßigerweise sind dabei die Coriolis-Rohrleitung 1 und die Anschluß-Rohrleitungen 11 einstückig ausgeführt; es handelt sich also vorzugsweise um eine insgesamt durchgehende Rohrleitung.

Im übrigen empfiehlt es sich, zum Schutz der Anschluß-Rohrleitungen 11 diese jeweils mit einem Verstärkungszylinder 12 zu ummanteln.

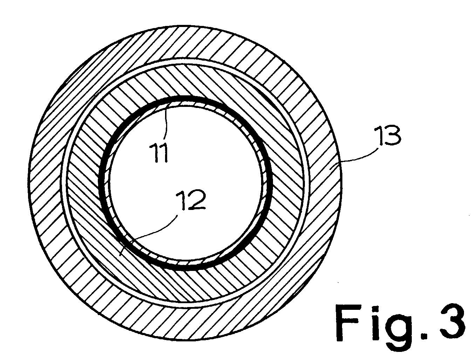

Aus den weiter oben dargelegten Gründen kann es zweckmäßig sein, die Anschluß-Rohrleitungen 11 mit Zug-Vorspannung innerhalb der Verstärkungszylinder 12 anzuordnen. Dabei können die Anschluß-Rohrleitungen 11 durch Hartlöten, vorzugsweise durch Vakuum-Hartlöten und vorzugsweise mit einer Nickel-Legierung mit einer Löttemperatur von ca. 1000° C, mit den Verstärkungszylindern 12 verbunden sein. Das ist in Fig. 3 angedeutet.

Die Maßnahme "Baueinheit aus Coriolis-Rohrleitung 1, Kompensationszylinder 6 und Verbindungsringen 7" führt in Verbindung mit der erfindungsgemäßen Maßnahme dazu, wie bereits ausgeführt, daß die - für die Messung wesentliche - Coriolis-Rohrleitung 1 - mehr oder weniger - "immun" gegen Temperaturschwankungen und gegen von außen einwirkende Kräfte und Momente ist.

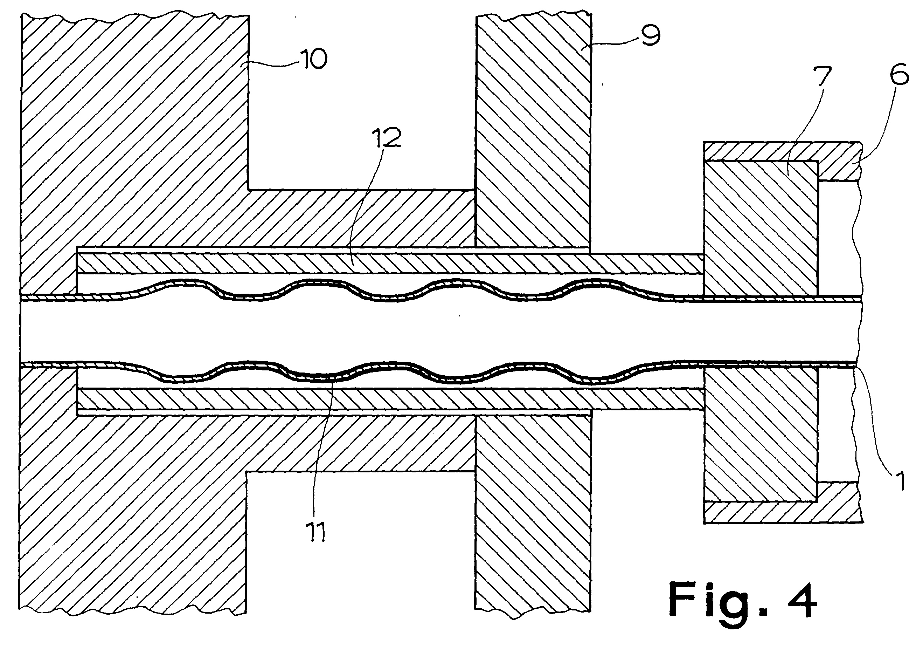

Zuvor sind Maßnahmen in bezug auf die Anschluß-Rohrleitungen 11 beschrieben worden. Hier bietet sich eine weitere, in Fig. 4 dargestellte Ausgestaltungsmöglichkeit, nämlich der Art, daß die Anschluß-Rohrleitungen 11 gewellt ausgeführt sind. Dadurch ist sichergestellt, daß die Baueinheit aus der Coriolis-Rohrleitung 1, dem Kompensationszylinder 6 und den Verbindungsringen 7 sich innerhalb bestimmter Grenzen thermisch ausdehnen kann, ohne daß insgesamt unzulässig hohe Spannungen auftreten.

Die Fig. 5, 6 und 7 zeigen Ausführungsbeispiele erfindungsgemäßer Massendurchflußmeßgeräte, bei denen auf andere Weise als zuvor in Verbindung mit Fig. 5 beschrieben, thermisch bedingte Ausdehnungen der Baueinheit aus der Coriolis-Rohrleitung 1, dem Kompensationszylinder 6 und den Verbindungsringen 7 nicht zu unzulässig hohen Spannungen führen.

In dem in Fig. 5 nur angedeuteten Ausführungsbeispiel sind die Anschluß-Rohrleitungen 11 innerhalb der Verstärkungszylinder 12 und der Anschlußflansche 10 axial beweglich. Dabei ist den der Coriolis-Rohrleitung 1 fernen Enden der Anschluß-Rohrleitungen 11 jeweils eine Dichtung 13 zugeordnet. Als Dichtungen können O-Ringe vorgesehen sein. Für das in Fig. 5 dargestellte Ausführungsbeispiel gilt jedoch, daß die Dichtungen 13 halbkreisförmig ausgeführt sind, aus Polytetrafluoräthylen bestehen und durch eine - nicht dargestellte - Feder aus rostfreiem Stahl beaufschlagt sind.

Im Ausführungsbeispiel nach Fig. 6 sind nur die Anschluß-Rohrleitungen 11 gekrümmt, nämlich S-förmig ausgeführt, während im Ausführungsbeispiel nach Fig. 7 auch die Enden 14 der Coriolis-Leitung 1 gekrümmt, nämlich viertelkreis-bogenförmig ausgeführt sind, wobei die Anschluß-Rohrleitungen 11 ebenfalls viertelkreisbogenförmig ausgeführt sind. Nur in Fig. 6 ist dargestellt, daß die gekrümmt ausgeführten Anschluß-Rohrleitungen 11 einen größeren Durchmesser als die Coriolis-Rohrleitung 1 aufweisen. Damit wird der durch die Krümmungen verursachte Druckabfall verringert oder gar eliminiert.

## Patentansprüche

1. Massendurchflußmeßgerät für strömende Medien, das nach dem Coriolis-Prinzip arbeitet, mit mindestens einer das strömende Medium führenden, zumindest im wesentlichen geraden Coriolis-Rohrleitung, mit mindestens einem auf die Coriolis-Rohrleitung einwirkenden Schwingungserzeuger, mit mindestens einem Coriolis-Kräfte und/oder auf Coriolis-Kräften beruhende Coriolis-Schwingungen erfassenden Meßwertaufnehmer und mit einem Kompensationszylinder, wobei die Coriolis-Rohrleitung (1) innerhalb des Kompensationszylinders (6) angeordnet ist und die Coriolis-Rohrleitung (1) und der Kompensationszylinder (6) in einer axiale Relativbewegungen ausschließenden Weise miteinander verbunden sind, **dadurch gekennzeichnet**, daß die Coriolis-Rohrleitung (1) mit Zug-Vorspannung innerhalb des Kompensationszylinders (6) angeordnet ist.

2. Massendurchflußmeßgerät nach Anspruch 1, dadurch gekennzeichnet, daß die Coriolis-Rohrleitung (1) und der Kompensationszylinder (6) über zwei endseitig an den Kompensationszylinder (6) angeschlossene Verbindungsringe (7) miteinander verbunden sind und die Verbindungsringe (7) vorzugsweise aus dem gleichen Werkstoff wie die Coriolis-Rohrleitung (1) bestehen.

3. Massendurchflußmeßgerät nach Anspruch 2, dadurch gekennzeichnet, daß die Coriolis-Rohrleitung (1) durch Schweißen oder durch Hartlöten mit den Verbindungsringen (7) verbunden ist.

4. Massendurchflußmeßgerät nach Anspruch 3, dadurch gekennzeichnet, daß die Coriolis-Rohrleitung (1) durch Vakuum-Hartlöten mit den Verbindungsringen (7) verbunden ist.

5. Massendurchflußmeßgerät nach einem der Ansprüche 1 bis 4, dadurch gekennzeichnet, daß die Coriolis-Rohrleitung (1) aus einer Nickel-Legierung, insbesondere aus Hastelloy C 22, besteht.

6. Massendurchflußmeßgerät nach einem der Ansprüche 1 bis 5, dadurch gekennzeichnet, daß der Kompensationszylinder (6) aus einer Nickel-Legierung, insbesondere aus Hastelloy C 4, oder aus unlegiertem Stahl AISI 1078 besteht.

7. Massendurchflußmeßgerät nach einem der Ansprüche 3 bis 6, dadurch gekennzeichnet, daß als Lötmaterial eine Nickel-Legierung mit einer Löttemperatur von ca. 1000° C verwendet ist.

8. Massendurchflußmeßgerät nach einem der Ansprüche 1 bis 7, dadurch gekennzeichnet, daß ein äußerer, vorzugsweise aus rostfreiem Stahl bestehender Aufnahmezylinder (8) vorgesehen und die Baueinheit aus der Coriolis-Rohrleitung (1), dem Kompensationszylinder (6) und den Verbindungsringen (7) innerhalb des Aufnahmezylinders (8) angeordnet ist.

9. Massendurchflußmeßgerät nach Anspruch 8, dadurch gekennzeichnet, daß der Aufnahmezylinder (8) zwei endseitig angeschlossene, vorzugsweise aus rostfreiem Stahl bestehende Verbindungsringe (9) aufweist, an die Verbindungsringe (9) jeweils ein nach außen ragender Anschlußflansch (10) angeschlossen ist und mit der Coriolis-Rohrleitung (1) verbundene Anschluß-Rohrleitungen (11) durch die Verbindungsringe (9) in die Anschlußflanschen (10) ragen.

10. Massendurchflußmeßgerät nach Anspruch 9, dadurch gekennzeichnet, daß die Coriolis-Rohrleitung (1) und die Anschluß-Rohrleitung (11) einstückig ausgeführt sind.

11. Massendurchflußmeßgerät nach Anspruch 10, dadurch gekennzeichnet, daß die Anschluß-Rohrleitungen (11) jeweils von einem vorzugsweise aus Nylo 36 bestehenden Verstärkungszylinder (12) ummantelt sind.

12. Massendurchflußmeßgerät nach Anspruch 11, dadurch gekennzeichnet, daß die Anschluß-Rohrleitungen (11) mit Zug-Vorspannung innerhalb der Verstärkungszylinder (12) angeordnet sind.

13. Massendurchflußmeßgerät nach Anspruch 12, dadurch gekennzeichnet, daß die Anschluß-Rohrleitungen (11) durch Hartlöten, vorzugsweise durch Vakuum-Hartlöten und vorzugsweise mit einer Nickel-Legierung mit einer Löttemperatur von ca. 1000° C, mit den Verstärkungszylindern (12) verbunden sind.

14. Massendurchflußmeßgerät nach einem der Ansprüche 9 bis 11, dadurch gekennzeichnet, daß die Anschluß-Rohrleitungen (11) gewellt ausgeführt sind.

15. Massendurchflußmeßgerät nach Anspruch 11, dadurch gekennzeichnet, daß die Anschluß-Rohrleitungen (11) innerhalb der Verstärkungszylinder (12) und der Anschlußflansche (10) axial beweglich sind.

16. Massendurchflußmeßgerät nach Anspruch 15, dadurch gekennzeichnet, daß den der Coriolis-Rohrleitung (1) fernen Enden der Anschluß-Rohrleitung (11) jeweils eine Dichtung (13) zugeordnet ist.

17. Massendurchflußmeßgerät nach Anspruch 16, dadurch gekennzeichnet, daß als Dichtungen O-Ringe vorgesehen sind.

18. Massendurchflußmeßgeräte nach Anspruch 16, dadurch gekennzeichnet, daß die Dichtungen (13) halbkreisringförmig ausgeführt sind, aus Polytetrafluoräthylen bestehen und durch eine Feder aus rostfreiem Stahl beaufschlagt sind.

19. Massendurchflußmeßgerät nach einem der Ansprüche 1 bis 10, dadurch gekennzeichnet, daß die Anschluß-Rohrleitungen (11) gekrümmt, vorzugsweise S-förmig ausgeführt sind.

20. Massendurchflußmeßgerät nach Anspruch 19, dadurch gekennzeichnet, daß die Enden (14) der Coriolis-Leitung (1) gekrümmt, vorzugsweise viertelkreisbogenförmig ausgeführt sind.

21. Massendurchflußmeßgerät nach Anspruch 19 oder 20, dadurch gekennzeichnet, daß die gekrümmt ausgeführten Anschluß-Rohrleitungen (11) und ggf. die gekrümmt ausgeführten Enden der Coriolis-Rohrleitung einen größeren Durchmesser als die Coriolis-Rohrleitung (1) aufweisen.

## Claims

1. A mass flow measuring device for flowing media which operates according to the Coriolis principle, having at least one Coriolis pipeline which conveys the flowing medium and which is at least substantially straight, having at least one vibration generator which acts on the Coriolis pipeline, having at least one measuring sensor which records Coriolis forces and/or Coriolis vibrations based on Coriolis forces, and having a compensating cylinder, wherein the Coriolis pipeline (1) is disposed inside the compensating cylinder (6), and the Coriolis pipeline (1) and the compensating cylinder (6) are joined to each other in a manner which excludes axial relative movements, **characterised in that** the Coriolis pipeline (1) is disposed under a tensile prestress inside the compensating cylinder (6).

2. A mass flow measuring device according to claim 1, characterised in that the Coriolis pipeline (1) and the compensating cylinder (6) are joined to each other via two connecting rings (7) which are attached to the compensating cylinder (6) at its ends, and the connecting rings (7) preferably consist of the same material as the Coriolis pipeline (1).

3. A mass flow measuring device according to claim 2, characterised in that the Coriolis pipeline (1) is joined to the connecting rings (7) by welding or brazing.

4. A mass flow measuring device according to claim 3, characterised in that the Coriolis pipeline (1) is joined to the connecting rings (7) by vacuum-brazing.

5. A mass flow measuring device according to any one of claims 1 to 4, characterised in that the Coriolis pipeline (1) consists of a nickel alloy, particularly of Hastelloy C 22.

6. A mass flow measuring device according to any one of claims 1 to 5, characterised in that the compensating cylinder (6) consists of a nickel alloy, particularly of Hastelloy C 4, or of unalloyed AISI 1078 steel.

7. A mass flow measuring device according to any one of claims 3 to 6, characterised in that a nickel alloy with a brazing temperature of about 1000°C is used as the brazing material.

8. A mass flow measuring device according to any one of claims 1 to 7, characterised in that an outer receiving cylinder (8) is provided, which preferably consists of stainless steel, and the constructional unit comprising the Coriolis pipeline (1), the compensating cylinder (6) and the connecting rings (7) is disposed inside the receiving cylinder (8).

9. A mass flow measuring device according to claim 8, characterised in that the receiving cylinder (8) comprises two connecting rings (9) which are attached at the ends and which preferably consist of stainless steel, an outwardly projecting connecting flange (10) is attached to each of the connecting rings (9), and connecting pipelines (11) joined to the Coriolis pipeline (1) protrude through the connecting rings (9) into the connecting flanges (10).

10. A mass flow measuring device according to claim 9, characterised in that the Coriolis pipeline (1) and the connecting pipeline (11) are constructed in one piece.

11. A mass flow measuring device according to claim 10, characterised in that the connecting pipelines (11) are each sheathed by a reinforcing cylinder (12) which preferably consists of Nylo 36.

12. A mass flow measuring device according to claim 11, characterised in that the connecting pipelines (11) are disposed under a tensile prestress inside the reinforcing cylinders (12).

13. A mass flow measuring device according to claim 12, characterised in that the connecting pipelines (11) are joined to the reinforcing cylinders (12) by brazing, preferably by vacuum-brazing, and preferably with a nickel alloy with a brazing temperature of about 1000°C.

14. A mass flow measuring device according to any one of claims 9 to 11, characterised in that the connecting pipelines (11) are of corrugated construction.

15. A mass flow measuring device according to claim 11, characterised in that the connecting pipelines (11) are axially movable inside the reinforcing cylinders (12) and the connecting flanges (10).

16. A mass flow measuring device according to claim 15, characterised in that a seal (13) is associated with each of the ends of the connecting pipelines (11) which are remote from the Coriolis pipeline (1).

17. A mass flow measuring device according to claim 16, characterised in that O-rings are provided as seals.

18. A mass flow measuring device according to claim 16, characterised in that the seals (13) are constructed as semicircular rings, consist of polytetrafluoroethylene and are acted upon by a spring made of stainless steel.

19. A mass flow measuring device according to any one of claims 1 to 10, characterised in that the connecting pipelines (11) are of curved construction, and are preferably S-shaped.

20. A mass flow measuring device according to claim 19, characterised in that the ends (14) of the Coriolis pipeline (1) are curved, and are preferably constructed as arcs of a quarter circle.

21. A mass flow measuring device according to claim 19 or 20, characterised in that the connecting pipelines (11) of curved construction and optionally the ends, which are of curved construction, of the Coriolis pipeline are of larger diameter than the Coriolis pipeline (1).

## Revendications

1. Débitmètre massique pour des milieux qui s'écoulent, qui travaille conformément au principe de Coriolis, comprenant au moins une conduite rigide de Coriolis au moins essentiellement rectiligne guidant le milieu qui s'écoule, au moins un dispositif générant des oscillations s'exerçant sur la conduite rigide de Coriolis, au moins un transducteur enregistrant les forces de Coriolis et/ou les oscillations de Coriolis s'appuyant sur les forces de Coriolis, ainsi qu'un cylindre de compensation, la conduite rigide de Coriolis (1) étant disposée à l'intérieur du cylindre de compensation (6) et la conduite rigide de Coriolis (1) et le cylindre de compensation (6) étant reliés l'un à l'autre d'une manière qui exclut des mouvements relatifs axiaux, caractérisé en ce que la conduite rigide de Coriolis (1) est disposée à l'intérieur du cylindre de compensation (6) avec une précontrainte de traction.

2. Débitmètre massique selon la revendication 1, caractérisé en ce que la conduite rigide de Coriolis (1) et le cylindre de compensation (6) sont reliés l'un à l'autre via deux anneaux de liaison (7) raccordés côté terminal au cylindre de compensation (6), et les anneaux de liaison (7) étant constitués de préférence de la même matière première que celle de la conduite rigide de Coriolis (1).

3. Débitmètre massique selon la revendication 2, caractérisé en ce que la conduite rigide de Coriolis (1) est reliée aux anneaux de liaison (7) par soudure ou par brasage fort.

4. Débitmètre massique selon la revendication 3, caractérisé en ce que la conduite rigide de Coriolis (1) est reliée aux anneaux de liaison (7) par brasage fort sous vide.

5. Débitmètre massique selon l'une quelconque des revendications 1 à 4, caractérisé en ce que la conduite rigide de Coriolis (1) est constituée par un alliage à base de nickel, en particulier Hastelloy C 22.

6. Débitmètre massique selon l'une quelconque des revendications 1 à 5, caractérisé en ce que le cylindre de compensation (6) est constitué par un alliage à base de nickel, en particulier Hastelloy C 4, ou par de l'acier non allié AISI 1078.

7. Débitmètre massique selon l'une quelconque des revendications 3 à 6 , caractérisé en ce qu'on utilise comme matière de brasage, un alliage à base de nickel possédant une température de brasage d'environ 1000°C.

8. Débitmètre massique selon l'une quelconque des revendications 1 à 7, caractérisé en ce qu'on prévoit un cylindre de réception externe (8) constitué de préférence en acier antirouille, et l'unité de construction constituée par la conduite rigide de Coriolis (1), par le cylindre de compensation (6) et par les anneaux de liaison (7) est disposée à l'intérieur du cylindre de réception (8).

9. Débitmètre massique selon la revendication 8, caractérisé en ce que le cylindre de réception (8) présente deux anneaux de liaison (9) constitués de préférence en acier antirouille, raccordés côté terminal, une bride de raccordement (10) faisant saillie vers l'extérieur est raccordée respectivement aux anneaux de liaison (9), et des conduites rigides de raccordement (11) reliées à la conduite rigide de Coriolis (1) font saillie à travers les anneaux de liaison (9) dans les brides de raccordement (10).

10. Débitmètre massique selon la revendication 9, caractérisé en ce que la conduite rigide de Coriolis (1) et la conduite rigide de raccordement (11) sont réalisées en une seule pièce.

11. Débitmètre massique selon la revendication 10, caractérisé en ce que les conduites rigides de raccordement (11) sont enveloppées respectivement par un cylindre de renforcement (12) constitué de préférence en Nylon 36.

12. Débitmètre massique selon la revendication 11, caractérisé en ce que les conduites rigides de raccordement (11) sont disposées à l'intérieur du cylindre de renforcement (12) avec une précontrainte de traction.

13. Débitmètre massique selon la revendication 12, caractérisé en ce que les conduites rigides de raccordement (11) sont reliées aux cylindres de renforcement (12) par brasage fort, de préférence par brasage fort sous vide, et de préférence avec un alliage à base de nickel possédant une température de brasage d'environ 1000°C.

14. Débitmètre massique selon l'une quelconque des revendications 9 à 11, caractérisé en ce que les conduites rigides de raccordement (11) sont réalisées en forme ondulée.

15. Débitmètre massique selon la revendication 11, caractérisé en ce que les conduites rigides de raccordement (11) sont mobiles en direction axiale à l'intérieur du cylindre de renforcement (12) et de la bride de raccordement (10).

16. Débitmètre massique selon la revendication 15, caractérisé en ce que, aux extrémités de la conduite rigide de raccordement (11) éloignées de la conduite rigide de Coriolis (1), est attribué respectivement un joint d'étanchéité (13).

17. Débitmètre massique selon la revendication 16, caractérisé en ce qu'on prévoit comme joints d'étanchéité, des joints toriques.

18. Débitmètre massique selon la revendication 16, caractérisé en ce que les joints d'étanchéité (13) sont réalisés en une forme semi-circulaire, sont constitués en polytétrafluoréthylène et sont chargés par un ressort en acier antirouille.

19. Débitmètre massique selon l'une quelconque des revendications 1 à 10, caractérisé en ce que les conduites rigides de raccordement (11) sont courbes, de préférence réalisées en forme de S.

20. Débitmètre massique selon la revendication 19, caractérisé en ce que les extrémités (14) de la conduite rigide de Coriolis (1) sont courbes, de préférence réalisées en forme de quart de circonférence.

21. Débitmètre massique selon la revendication 19 ou 20, caractérisé en ce que les conduites rigides de raccordement (11) réalisées de manière courbe et éventuellement les extrémités de la conduite rigide de Coriolis réalisée de manière courbe présentent un diamètre supérieur à celui de la conduite rigide de Coriolis (1).
